# EUROPÄISCHE PATENTSCHRIFT

(11) **EP 2 256 516 B1**
(45) Veröffentlichungstag und Bekanntmachung des Hinweises auf die Patenterteilung: **24.01.2018**
(21) Anmeldenummer: 10163050.7
(22) Anmeldetag: 18.05.2010
(51) Int. Cl.: G01S 17/08, G01S 7/481, G01S 7/51

(54) **Lasergerät zur elektrooptischen Distanzmessung**
Laser device for electro-optical distance measurement
Appareil laser pour la mesure électro-optique de distances

(30) Priorität: 29.05.2009 DE 102009026611
(43) Veröffentlichungstag der Anmeldung: 01.12.2010
(73) Patentinhaber: HILTI Aktiengesellschaft, 9494 Schaan (LI); JENOPTIK Advanced Systems GmbH, 22880 Wedel (DE)
(72) Erfinder: Gogolla, Torsten, 9494, Schaan (LI); Winter, Andreas, 6800, Feldkirch (AT); Seifert, Helmut, 07616, Serba (DE); Schusser, Gero, 07745, Jena (DE)
(74) Vertreter: Hilti Aktiengesellschaft Corporate Intellectual Property

(56) Entgegenhaltungen:
- GB-A- 2 415 501
- US-A1- 2002 093 639
- US-A1- 2007 058 155

## Beschreibung

Die vorliegende Erfindung betrifft ein Lasergerät zur elektrooptischen Messung der Distanz eines Zielobjektes zu einer Referenzmarke bestehend aus einem Gehäuse, einer Messeinrichtung, die einen Laserstrahl aussendet und aus dem von dem Zielobjekt kommenden Empfangsstrahl einen Distanzwert ermittelt, einer Austrittsöffnung zum Auskoppeln des Laserstrahls aus dem Gehäuse, einer Anzeigeeinrichtung zur Anzeige des Distanzwertes und einer Bedieneinrichtung zur Bedienung des Lasergerätes und zum Starten einer Distanzmessung, wobei die Anzeige- und Bedieneinrichtungen auf einer Oberseite des Gehäuses angeordnet sind.

Lasergeräte zur optischen Distanzmessung, im Folgenden als Laserdistanzmessgerät bezeichnet, sind aus dem Stand der Technik bekannt und werden kommerziell vertrieben. Diese Laserdistanzmessgeräte senden einen modulierten Laserstrahl aus, der auf die Oberfläche eines Zielobjektes, dessen Distanz zum Laserdistanzmessgerät zu ermitteln ist, ausgerichtet ist. Das Licht des von der Oberfläche des Zielobjektes reflektierten oder gestreuten Laserstrahls, im Folgenden Empfangsstrahl genannt, wird vom Laserdistanzmessgerät detektiert und zur Ermittlung der Distanz verwendet. Der Anwendungsbereich derartiger Laserdistanzmessgeräte umfasst in der Regel Entfernungen von einigen Zentimetern bis zu einigen hundert Metern. Die aus dem Stand der Technik bekannten Laserdistanzmessgeräte lassen sich entsprechend der Anordnung der Sende- und Empfangseinrichtungen in zwei Kategorien unterteilen, in biaxiale Anordnungen und koaxiale Anordnungen.

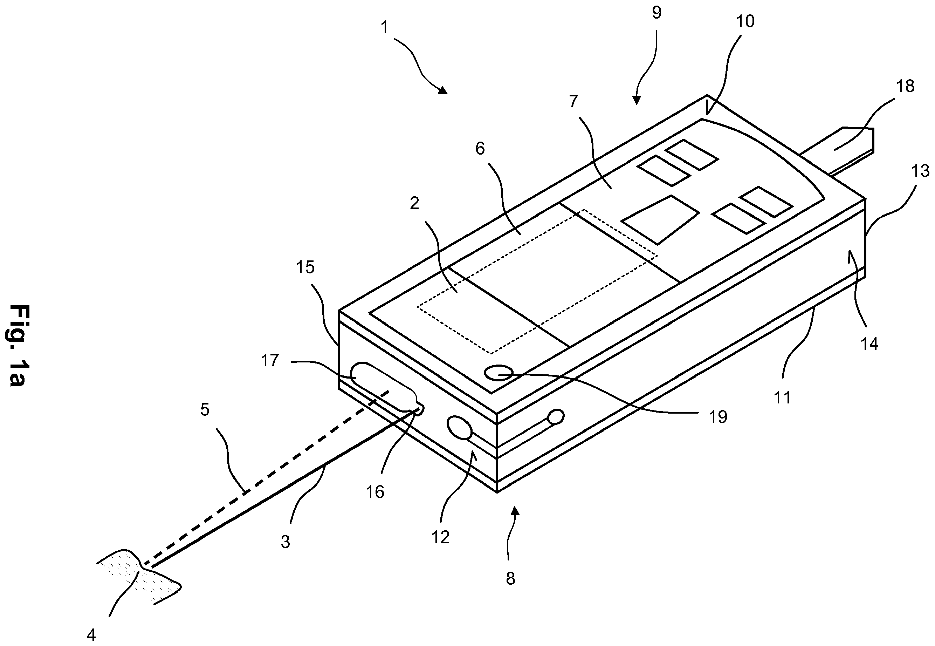

**Fig. 1a** zeigt ein bekanntes Laserdistanzmessgerät **1** mit einer Messeinrichtung **2,** die einen Laserstrahl **3** auf ein Zielobjekt **4** ausrichtet und aus dem Licht des vom Zielobjekt 4 reflektierten oder gestreuten Laserstrahls, das als Empfangsstrahl **5** bezeichnet wird, einen Distanzwert ermittelt, mit einer Anzeigeeinrichtung **6** zur Anzeige des ermittelten Distanzwertes sowie einer Bedieneinrichtung **7** zur Bedienung des Laserdistanzmessgerätes 1 und zum Starten einer Distanzmessung. Das Laserdistanzmessgerät 1 weist außerdem eine optische Zieleinrichtung **8** auf, die die Distanzmessung besonders bei Außenmessungen oder bei schlechten Sichtverhältnissen erleichtern soll, wenn der Laserstrahl 3 mit bloßem Auge auf dem Zielobjekt 4 schlecht oder nicht mehr sichtbar ist.

Das Laserdistanzmessgerät 1 ist von einem Gehäuse **9** umgeben. Die Anzeige- und Bedieneinrichtungen 6, 7 sind in eine Oberseite **10** des Gehäuses 9 eingebettet. Um einen hohen Bedienkomfort bei der Bedienung des Laserdistanzmessgerätes 1 und der Anzeige des Distanzwertes zu gewährleisten, sind die Oberseite 10 und die der Oberseite 10 gegenüberliegende Unterseite **11** des Gehäuses 9 die beiden größten Gehäuseflächen des Laserdistanzmessgerätes 1. Die an die Oberseite 10 angrenzenden Vorder- und Hinterseiten **12, 13** sowie die Seitenflächen **14, 15** des Gehäuses 9 sind möglichst klein ausgebildet, um ein handliches Laserdistanzmessgerät 1 aufzubauen.

Der Austritt des Laserstrahls 3 aus dem Gehäuse 9 erfolgt über eine Austrittsöffnung **16,** die an der Vorderseite 12 des Gehäuses 9 angeordnet ist, wobei die optische Achse des Laserstrahls 3 annähernd senkrecht zur Vorderseite 12 ausgerichtet ist. Der vom Zielobjekt 4 kommende Empfangsstrahl 5 tritt über eine Eintrittsöffnung 17, die ebenfalls in der Vorderseite 12 angeordnet ist, in das Laserdistanzmessgerät 1 ein. Bei dem in Fig. 1a gezeigten Laserdistanzmessgerät 1 sind die Sende- und Empfangseinrichtungen biaxial angeordnet, d.h. ihre optischen Achsen verlaufen parallel zueinander, fallen aber nicht zusammen. Daher sind die Eintrittsöffnung 17 für den Empfangsstrahl 5 und die Austrittsöffnung für den Laserstrahl 3 räumlich voneinander getrennt in der Vorderseite 12 angeordnet.

Die Distanzmessung zu dem Zielobjekt 4 erfolgt in Bezug auf eine am Laserdistanzmessgerät befindliche Referenzmarke. Bei dem bekannten Laserdistanzmessgerät 1 werden die Vorderseite 12, die Hinterseite 13, eine Anschlagspitze **18** oder Messverlängerungen (nicht gezeigt) als Referenzmarken verwendet. Die Umschaltung zwischen den Referenzmarken 12, 13, 18 erfolgt über eine Umschalteinrichtung **19** oder automatisch, bspw. wenn die Anschlagspitze 18 um 180° ausgeklappt ist.

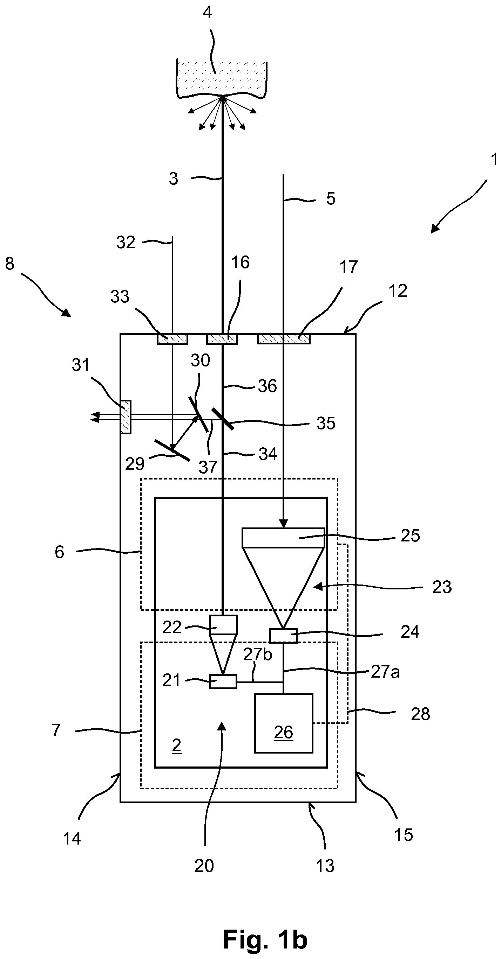

**Fig. 1b** zeigt eine schematische Ansicht von innen auf das aus Fig. 1a bekannte Laserdistanzmessgerät 1 mit der Messeinrichtung 2, der optischen Zieleinrichtung 8 sowie den Anzeige- und Bedieneinrichtungen 6, 7. Die Messeinrichtung 2 umfasst eine Sendeeinrichtung **20** mit einer Strahlquelle **21** und einer ersten Strahlformungsoptik **22,** eine Empfangseinrichtung **23** mit einem Detektor **24** und einer zweiten Strahlformungsoptik **25** sowie eine Auswerteeinrichtung **26.** Die Auswerteeinrichtung 26 ist über Kommunikationsverbindungen **27a, 27b, 28** mit dem Detektor 24, der Strahlquelle 21 und der Anzeigeeinrichtung 6 verbunden. Sie bestimmt aus der Zeitdifferenz zwischen dem von der Strahlquelle 21 ausgesandten Laserstrahl 3 und dem vom Detektor 24 erfassten Empfangsstrahl 5 den Distanzwert zum Zielobjekt 4.

Die optische Zieleinrichtung 8 weist ein erstes optisches Element **29** und ein zweites optisches Element **30** auf. Der Anwender sieht über einen Visiereinblick **31,** der in der Seitenfläche 14 des Gehäuses 9 angeordnet ist, in die optische Zieleinrichtung 8. Dabei sieht der Anwender auf das zweite optische Element 30, das für die Laserwellenlänge überwiegend transmittierend und für den Wellenlängenbereich des vom Zielobjekt 4 ausgehenden Umgebungslichts **32** überwiegend reflektierend ausgebildet ist. Das vom Zielobjekt 4 kommende Umgebungslicht 32 tritt mit dem Bild des Zielobjektes 4 über eine Eintrittsöffnung **33** in der Vorderseite 12 in die optische Zieleinrichtung 8 ein und trifft auf das erste optische Element 29. Von dort wird es in Richtung des zweiten optischen Elements 30 abgelenkt. Dadurch, dass das Bild des Zielobjektes 4 zweifach an dem ersten und zweiten optischen Element 29, 30 reflektiert wird, entsteht ein aufrecht stehendes, seitenrichtiges Bild des Zielobjektes 4, welches vom Anwender im Visiereinblick 31 wahrgenommen wird.

Im Strahlengang des aus der Messeinrichtung 2 ausgekoppelten Laserstrahls **34** ist ein Strahlteiler **35** angeordnet, der vorzugsweise unter 45° zur optischen Achse des Laserstrahls 34 geneigt ist. Der Strahlteiler 35 ist so ausgebildet, dass der überwiegende Teil des Laserstrahls (z.B. ≥ 95 %) als transmittierter Laserstrahl **36** durch den Strahlteiler 35 hindurch tritt, während der übrige Teil (z.B. 5 %) als reflektierter Laserstrahl **37** abgelenkt wird. Der reflektierte Laserstrahl 37 durchdringt das zweite optische Element 30 der optischen Zieleinrichtung 8 und kann vom Anwender als heller, nahezu punktförmiger Lichtfleck wahrgenommen werden. Das zweite optische Element 30 ist so ausgebildet, dass es für die Laserwellenlänge λ transmittierend und für den Wellenlängenbereich des vom Zielobjekt 4 ausgehenden Umgebungslichts bis auf einen schmalen Bereich um die Laserwellenlänge λ überwiegend reflektierend ist. Der Anwender sieht beim Blick in die optische Zieleinrichtung 8 das Bild des Zielobjektes 4 und den Lichtfleck des reflektierten Laserstrahls 37, der sich an derselben Position im Bild des Zielobjektes 4 befindet, wie der Laserstrahl 3 auf der Oberfläche des Zielobjektes 4. Über die Positionierung des aus dem reflektierten Laserstrahl 37 resultierenden Lichtpunktes im Bild des Zielobjektes 4 erfolgt die genaue Positionierung des Laserstrahls 3 auf der Oberfläche des Zielobjektes 4.

Bei allen kommerziell erhältlichen Laserdistanzmessgeräten ist die Austrittsöffnung zum Auskoppeln des Laserstrahls wie bei dem in Fig. 1a, b gezeigten Laserdistanzmessgerät 1 an der Vorderseite des Gehäuses angeordnet und die Distanzmessung erfolgt vor allem in Bezug auf die Vorder- und Hinterseiten als Referenzmarken. Bei handgeführten Laserdistanzmessgeräten geht die Entwicklung hin zu kleineren und flacheren Geräten. Diese kleineren und flacheren Laserdistanzmessgeräte führen zu schmalen Vorder- und Hinterseiten, die das Positionieren des Laserstrahls auf dem Zielobjekt erschweren, da vor allem bei unebenem Untergrund kein ausreichend stabiler Stand des Laserdistanzmessgeräts gewährleistet ist. Außerdem ist die Distanzmessung erst für Entfernungen möglich, die größer als die Länge des Gehäuses sind.

Aus US 2007/0058155 A1 ist ein Laserdistanzmessgerät mit drei Messeinrichtungen bekannt, die jeweils eine Sendeeinrichtung mit einer Strahlquelle und einer Strahlformungsoptik sowie eine Empfangseinrichtung mit einem Detektor und einer Strahlformungsoptik aufweisen. Die drei Messeinrichtungen sind unter bekannten Winkeln zueinander angeordnet und jede Messeinrichtung misst die Distanz zu einem Zielobjekt. Aus den gemessenen Distanzen der Messeinrichtungen zu den Zielobjekten und den bekannten Winkeln zwischen den Messeinrichtungen werden in einer Auswerteeinrichtung verschiedene Raum- und/oder Winkelgrössen berechnet. Anzeige- und Bedieneinrichtungen für das Laserdistanzmessgerät sind auf einer Oberseite des Gehäuses angeordnet, wobei die Oberseite und eine der Oberseite gegenüberliegende Unterseite die beiden größten Gehäuseflächen des Laserdistanzmessgerätes darstellen. Die Auskopplung der Laserstrahlen aus dem Gehäuse erfolgt über Austrittsöffnungen, die in der Vorderseite des Gehäuses angeordnet sind. Die Vorderseite besteht aus drei Teilflächen, die zueinander geneigt sind

GB 2 415 501 A offenbart ein Lasergerät mit einer Messeinrichtung zur Laserdistanzmessung und zwei weiteren Lasereinheiten, die auf einander gegenüberliegenden Flächen eine sichtbare Referenzlinie erzeugen. Der Laserstrahl für die Laserdistanzmessung wird über eine Austrittsöffnung in der Vorderseite des Gehäuses aus dem Gehäuse ausgekoppelt.

Aus US 2002/093639 A1 ist ein weiteres Lasergerät zur elektrooptischen Messung der Distanz eines Zielobjektes zu einer Referenzmarke bestehend aus einem Gehäuse, einer Messeinrichtung, die einen Laserstrahl aussendet und aus dem von dem Zielobjekt kommenden Empfangsstrahl einen Distanzwert ermittelt, einer Austrittsöffnung zum Auskoppeln des Laserstrahls aus dem Gehäuse, einer Anzeigeeinrichtung und einer Bedieneinrichtung bekannt. Die Auskopplung des Laserstrahls erfolgt über eine Sendeoptik und die Einkopplung des Empfangsstrahls erfolgt über eine Empfangsoptik, die parallel versetzt in einer Vorderseite des Gehäuses angeordnet sind.

Nachteilig ist, dass die Auskopplung des Laserstrahls aus dem Gehäuse bei den bekannten Laserdistanzmessgeräten an der Vorderseite des Gehäuses erfolgt und die Vorderseite und eine der Vorderseite gegenüberliegende Rückseite die kleinsten Gehäuseflächen des Laserdistanzmessgerätes darstellen. Wenn die Vorder- oder Rückseite des Gehäuses als Referenzmarke bei der Distanzmessung verwendet wird, weisen die kleinen Gehäuseflächen eine geringe Stabilität auf und bieten keine stabilen Stand für das Laserdistanzmessgerät.

Die Aufgabe der vorliegenden Erfindung besteht demgegenüber darin, ein Lasergerät zur optischen Distanzmessung bereitzustellen, bei dem ein ausreichend stabiler Stand während der Distanzmessung gewährleistet ist. Außerdem soll auch die Distanzmessung kleiner Entfernungen in beengten Verhältnissen möglich sein.

Diese Aufgabe wird bei dem eingangs genannten Lasergerät zur elektrooptischen Distanzmessung erfindungsgemäß durch das Lasergerät nach Anspruch 1 gelöst. Die Anordnung der Austrittsöffnung zum Auskoppeln des Laserstrahls in der Oberseite, in der der Oberseite gegenüberliegenden Unterseite oder in einer der Seitenflächen des Gehäuses bietet den Vorteil einer stabilen Gerätefläche als Referenzmarke. Als Referenzmarken für die Distanzmessung dienen die Fläche, an der der Laserstrahl aus dem Gehäuse ausgekoppelt wird, und die dieser Fläche gegenüberliegende Gehäusefläche sowie Messverlängerungen. Da die Anzeige- und Bedieneinrichtungen in der Oberseite des Gehäuses angeordnet sind, sind die Ober- und Unterseiten, die durch die Länge und Breite des Gehäuses bestimmt sind, in der Regel die beiden größten Gehäuseflächen. Die Seitenflächen sind durch die Länge und Tiefe des Gehäuses festgelegt.

Bevorzugt ist im Gehäuse mindestens eine weitere Austrittsöffnung, über die der Laserstrahl aus dem Gehäuse auskoppelbar ist, vorgesehen. Dabei sind die Austrittsöffnung und die mindestens eine weitere Austrittsöffnung in einer besonders bevorzugten Ausführung in einander gegenüberliegenden Flächen des Gehäuses angeordnet. Mit einem derartigen Laserdistanzmessgerät können Entfernungsmessungen von einem Punkt zu beiden Seiten in einer Raumrichtung durchgeführt werden. Dies ist vorteilhaft, wenn beispielsweise Entfernungen zwischen zwei schlecht erreichbaren Zielobjekten bestimmt werden sollen.

In einer weiteren bevorzugten Ausführung sind die Austrittsöffnung und die mindestens eine weitere Austrittsöffnung in aneinander grenzenden Flächen des Gehäuses angeordnet. Mit einem derartigen Laserdistanzmessgerät können Entfernungsmessungen von einem Punkt in zwei Raumrichtungen durchgeführt werden. Über die Auswerteeinrichtung können Flächenberechnungen durchgeführt und die Ergebnisse auf der Anzeigeeinrichtung dem Anwender angezeigt werden.

Bevorzugt sind drei Austrittsöffnungen zum Auskoppeln des Laserstrahls aus dem Gehäuse vorgesehen. Dabei sind in einer besonders bevorzugten Ausführung eine erste Austrittsöffnung in der Ober- oder Unterseite, eine zweite Austrittsöffnung in einer der Seitenflächen und eine dritte Austrittsöffnung in der Vorder- oder Hinterseite des Gehäuses angeordnet.

Ein derartiges Laserdistanzmessgerät bietet die Möglichkeit die Abmessungen ausgehend von einem Punkt in allen drei Raumrichtungen durchzuführen, ohne dass das Laserdistanzmessgerät neu ausgerichtet werden muss. Über die Auswerteeinrichtung können Flächen- oder Volumenberechnungen durchgeführt und die Ergebnisse auf der Anzeigeeinrichtung dem Anwender angezeigt werden.

Bevorzugt ist eine Umschalteinrichtung zum Wechseln des Betriebsmodus des Lasergeräts aus einem ersten Betriebsmodus, bei dem der Laserstrahl über die Austrittsöffnung auskoppelbar ist, in mindestens einen weiteren Betriebsmodus, bei dem der Laserstrahl über die mindestens eine weitere Austrittsöffnung auskoppelbar ist, vorgesehen. Die Umschalteinrichtung ist besonders bevorzugt derart ausgebildet, dass eine schwenkbare Optik bei Betätigung der Umschalteinrichtung aus einer ersten Position in mindestens eine weitere Position bewegt wird, wobei die erste und die mindestens eine weitere Position derart ausgebildet sind, dass der Laserstrahl über die Austrittsöffnung bzw. über die mindestens eine weitere Austrittsöffnung aus dem Gehäuse auskoppelbar ist. Durch die Umschaltung zwischen verschiedenen Austrittsöffnungen mittels der Umschalteinrichtung kann der Anwender das Lasergerät an die örtlichen Gegebenheiten anpassen.

In einer bevorzugten Ausführung ist eine Signaleinrichtung vorgesehen, die die ausgewählte Austrittsöffnung anzeigt, wobei die Signaleinrichtung insbesondere in der Oberseite des Gehäuses angeordnet ist.

Bevorzugt ist eine optische Zieleinrichtung mit einem ersten optischen Element und einem zweiten optischen Element vorgesehen.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a,b: ein bekanntes Laserdistanzmessgerät in einer Ansicht von außen (Fig. 1a) und in einer Ansicht von innen (Fig. 1b);
- Fig. 2: eine erste Ausführungsform eines erfindungsgemäßen Laserdistanzmessgeräts mit drei Auskoppelöffnungen für den Laserstrahl in der Oberseite, der Vorderseite und einer Seitenfläche des Gehäuses; und
- Fig. 3: eine zweite Ausführungsform eines erfindungsgemäßen Laserdistanzmessgeräts mit einer optischen Zieleinrichtung.

Gleiche oder funktionsgleiche Elemente werden durch gleiche Bezugszeichen in den Figuren indiziert, soweit nicht anders angegeben.

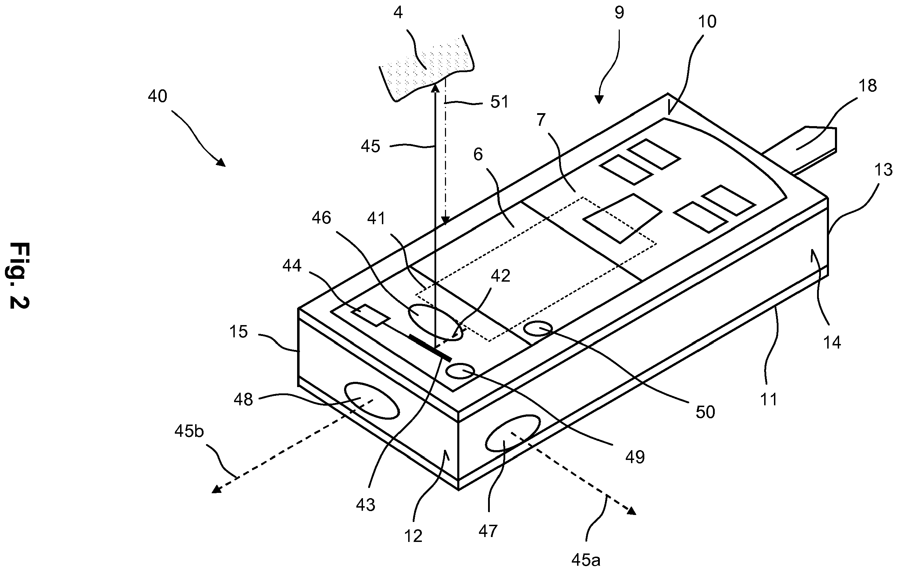

**Fig.** 2 zeigt eine erste Ausführungsform eines erfindungsgemäßen Laserdistanzmessgeräts **40** zur optischen Messung einer Distanz des Zielobjektes 4 zu einer am Laserdistanzmessgerät 40 befindlichen Referenzmarke 10-15, 18. Das Laserdistanzmessgerät 40 unterscheidet sich durch die Auskopplung des Laserstrahls von dem in Fig. 1a dargestellten Laserdistanzmessgerät 1, ist ansonsten analog aufgebaut. Das Laserdistanzmessgerät 40 umfasst neben einer Messeinrichtung **41** in koaxialem Aufbau die Anzeige- und Bedieneinrichtungen 6, 7, die auf der Oberseite 10 des Gehäuses 9 angeordnet sind.

Der aus der Messeinrichtung 41 ausgekoppelte Laserstrahl **42** trifft auf eine Umlenkoptik **43,** die im Strahlengang des Laserstrahls 42 angeordnet ist. Die Umlenkoptik 43 ist verschwenkbar ausgebildet und kann mittels einer Verstelleinrichtung **44** in mehreren Stufen oder stufenlos verstellt werden. In der Ausführung von Fig. 2 ist die Umlenkoptik 43 so angeordnet, dass der Laserstrahl 42 an der Umlenkoptik um 90° umgelenkt und als Laserstrahl **45** über eine Auskoppelöffnung **46,** die in der Oberseite des Gehäuses 9 angeordnet ist, aus dem Laserdistanzmessgerät 40 ausgekoppelt wird.

Das Laserdistanzmessgerät 40 weist neben der ersten Austrittsöffnung 46 eine zweite Austrittsöffnung **47** in der Seitenfläche 14 und eine dritte Austrittsöffnung **48** in der Vorderseite 12 auf. Über eine Umschalteinrichtung **49,** die mit der Verstelleinrichtung 44 gekoppelt ist, stellt der Anwender ein, an welcher Austrittsöffnung 46, 47, 48 der Laserstrahl 45, 45a, 45b das Laserdistanzmessgerät 40 verlässt. Eine Signaleinrichtung **50,** die in der Oberseite 10 angeordnet ist, zeigt an, über welche Austrittsöffnung 46, 47, 48 der Laserstrahl 45, 45a, 45b das Laserdistanzmessgerät 40 verlässt.

Der vom Zielobjekt 4 kommende Empfangsstrahl **51** tritt über die Austrittsöffnung 46 in das Laserdistanzmessgerät 40 ein.

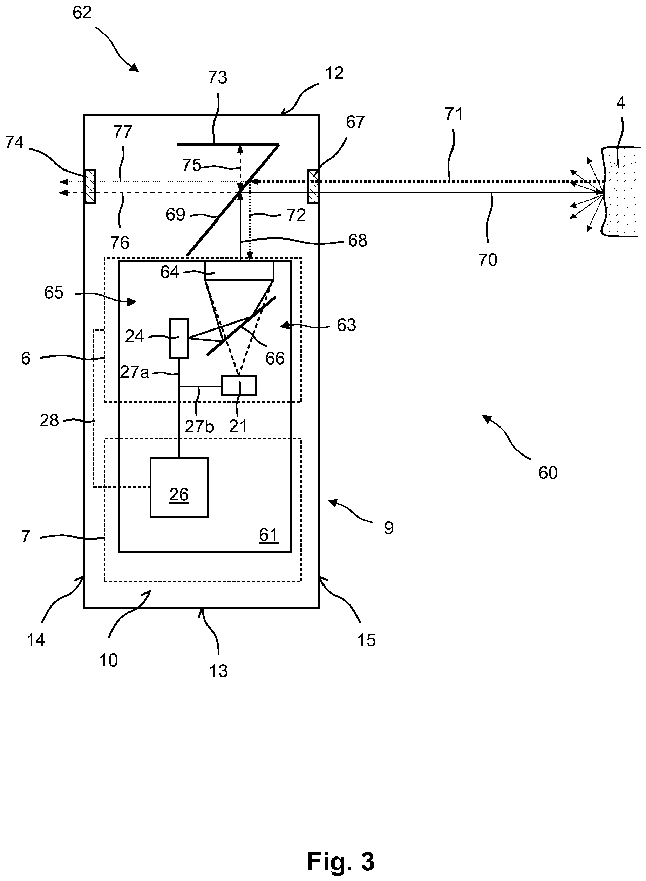

**Fig. 3** zeigt eine zweite Ausführungsform eines erfindungsgemäßen Laserdistanzmessgeräts **60** zur optischen Messung der Distanz zwischen dem Zielobjekt 4 und einer am Laserdistanzmessgerät 60 befindlichen Referenzmarke. Das Laserdistanzmessgerät 60 umfasst eine Messeinrichtung **61** in koaxialem Aufbau, eine optische Zieleinrichtung **62** sowie die Anzeige- und Bedieneinrichtungen 6, 7, die auf der Oberseite 10 des Gehäuses 9 angeordnet sind.

Die Messeinrichtung 61 umfasst eine Sendeeinrichtung **63** mit der Strahlquelle 21 und einer Strahlformungsoptik **64,** eine Empfangseinrichtung **65** mit dem Detektor 24 und der Strahlformungsoptik 64, die Auswerteeinrichtung 26 sowie einen Strahlteiler **66.** Die Sende- und Empfangseinrichtungen 63, 65 sind koaxial angeordnet, d.h. ihre optischen Achsen fallen zusammen. Die Strahlquelle 21 ist bspw. ein Halbleiterlaser, der einen Laserstrahl im sichtbaren Spektrum, bspw. einen roten Laserstrahl mit einer Wellenlänge von 635 nm, erzeugt oder ein anderer Laser mit einer geeigneten Wellenlänge und Leistung. Der Laserstrahl verlässt die Strahlquelle 21 an einer Öffnung, an der der Laserstrahl gebeugt wird. Aufgrund der Beugung und Divergenz kommt es zu einer Aufweitung des Laserstrahls. Um den Strahldurchmesser des Laserstrahls auf dem Zielobjekt 4 zu begrenzen, wird der Laserstrahl mit Hilfe der Strahlformungsoptik 64 kollimiert oder auf das Zielobjekt 4 fokussiert. Die Strahlformungsoptik 64 ist ein gemeinsames optisches Element der Sende- und Empfangseinrichtungen 63, 65. Sie ist derart ausgebildet, dass der aus der Strahlquelle 21 ausgekoppelte Laserstrahl kollimiert bzw. auf das Zielobjekt 4 fokussiert und der vom Zielobjekt 4 kommende Empfangsstrahl über den Strahlteiler 66 auf den Detektor 24 fokussiert wird. Mit Hilfe des Strahlteilers 66 wird der aus der Strahlquelle 21 ausgekoppelte Laserstrahl von dem Empfangsstrahl, der vom Zielobjekt 4 reflektiert oder gestreut wird und von dem Detektor 24 erfasst werden soll, getrennt. Der Strahlteiler 66 ist so ausgebildet, dass er für die Wellenlänge und Polarisationsrichtung des Laserstrahls überwiegend transmittierend ausgebildet ist. Der Detektor 24 ist bspw. eine Fotodiode oder ein anderer an die Wellenlänge und die Leistung der Strahlquelle 21 angepasster Empfänger. Der vom Zielobjekt 4 reflektierte oder gestreute Empfangsstrahl wird mit Hilfe der Strahlformungsoptik 64 und dem Strahlteiler 66 auf den Detektor 24 fokussiert. Der Strahlteiler 66 ist für die Wellenlänge des Laserstrahls und die zum Laserstrahl orthogonale Polarisationsrichtung im Wesentlichen reflektierend ausgebildet. Die Auswerteeinrichtung 26 ist über die Kommunikationsverbindungen 27a, 27b mit dem Detektor 24 und der Strahlquelle 21 verbunden und bestimmt aus der Zeitdifferenz zwischen dem von der Strahlquelle ausgesandten Laserstrahl und dem vom Detektor 24 erfassten Empfangsstrahl den Distanzwert zum Zielobjekt 4. Über die Kommunikationsverbindung 28 ist die Auswerteeinrichtung 26 mit der Anzeigeeinrichtung 6, die den gemessenen Distanzwert anzeigt, verbunden.

Eine Austrittsöffnung **67** zum Auskoppeln des Laserstrahls aus dem Gehäuse 9 des Laserdistanzmessgerätes 60 ist in der Seitenfläche 15 angeordnet. Um den aus der Messeinrichtung 61 ausgekoppelten Laserstrahl **68** in Richtung der Austrittsöffnung 67 abzulenken, ist eine Umlenkoptik **69** vorgesehen, die vorzugsweise unter 45° zur optischen Achse des Laserstrahls 68 geneigt ist. Die Umlenkoptik 69 ist so ausgebildet, dass der überwiegende Teil (z.B. 95 %) als reflektierter Laserstrahl **70** in Richtung der Austrittsöffnung 67 abgelenkt wird. Der reflektierte Laserstrahl 70 verlässt das Laserdistanzmessgerät 60 über die Austrittsöffnung 67 und trifft auf das Zielobjekt 4, an dem der Laserstrahl 70 reflektiert und/oder gestreut wird. Das reflektierte und/oder gestreute Laserlicht tritt als Empfangsstrahl **71** über die Austrittsöffnung 67 in das Laserdistanzmessgerät 60 ein und trifft auf die Umlenkoptik 69. An der Umlenkoptik 69 wird der überwiegende Teil (z.B. 95 %) des Empfangsstrahls 71 als reflektierter Empfangsstrahl **72** in Richtung der Strahlformungsoptik 64 der Messeinrichtung 61 abgelenkt. Der reflektierte Empfangsstrahl 72 wird von der Strahlformungsoptik 64 fokussiert und über den Strahlteiler 66 auf den Detektor 24 abgebildet.

Die optische Zieleinrichtung 62 ist vorgesehen, um den Anwender bei der Ausrichtung des Laserstrahls 70 auf das Zielobjekt 4 zu unterstützen und umfasst zwei optische Elemente, die Umlenkoptik 69 als erstes optisches Element und ein zweites optisches Element **73.** Der Anwender sieht über einen Visiereinblick **74,** der in der Seitenfläche 14 des Gehäuses 9 angeordnet ist, in die optische Zieleinrichtung 62 und blickt auf die Umlenkoptik 69. Die Ausrichtung des Laserstrahls 70 auf das Zielobjekt 4 erfolgt folgendermassen: An der Umlenkoptik 69, die für die Laserwellenlänge überwiegend reflektierend ausgebildet ist, tritt ein geringer Teil des Laserstrahls 68 als transmittierter Laserstrahl **75** durch die Umlenkoptik 69 hindurch. Im Strahlengang des transmittierten Laserstrahls 75 ist das zweite optische Element 73 der optischen Zieleinrichtung 62 angeordnet, das für die Laserwellenlänge überwiegend reflektierend ausgebildet ist. Der transmittierte Laserstrahl 75 wird am zweiten optischen Element 73 in sich selbst reflektiert und trifft auf die Umlenkoptik 69. Dort wird der überwiegende Teil des Laserstrahls 75 als reflektierter Laserstrahl **76** in Richtung des Visiereinblicks 74 abgelenkt und erreicht auf diese Weise stark abgeschwächt das Auge des Anwenders, der den Laserstrahl 76 als scharfen Lichtpunkt wahrnimmt. Des Weiteren tritt auch das vom Zielobjekt 4 kommende Umgebungslicht durch die Austrittsöffnung 67 und die Umlenkoptik 69 und wird vom Anwender über den Visiereinblick 74 zusammen mit dem Lichtpunkt des Laserstrahls 76 wahrgenommen. Hierbei werden die Laserwellenlängenanteile aus dem Umgebungslicht entfernt, da sie durch die Umlenkoptik 69 reflektiert werden. Der Lichtpunkt des in das Auge des Anwenders eingespiegelten Laserstrahls 76 wird vom Anwender an derselben Position im Zielobjektbild wahrgenommen wie der meist unsichtbare reale Lichtfleck des Laserstrahls 70 auf der Oberfläche des Zielobjektes 4.

Der Visiereinblick 74 der optischen Zieleinrichtung 62 ist in der Seitenfläche 14 des Gehäuses 9 angeordnet. Der Eintritt des vom Zielobjekt 4 kommenden Umgebungslichts erfolgt über die Austrittsöffnung 67, die in der der Seitenfläche 14 gegenüber liegenden Seitenfläche 15 angeordnet ist. Im Gegensatz zu den bekannten Laserdistanzmessgeräten, bei denen die Eintrittsöffnung in der Vorderseite 12 des Gehäuses 9 und der Visiereinblick der optischen Zieleinrichtung in einer Seitenfläche des Gehäuses angeordnet sind, befinden sich die Eintrittsöffnung 67 und der Visiereinblick 74 auf gegenüberliegenden Gehäuseflächen. Das Stabilisierungssystem des menschlichen Auge-Hirn-Komplexes arbeit besonders gut, wenn die Justierung wie bei dem Laserdistanzmessgerät 60 parallel zur Ausbreitungsrichtung erfolgt. Bei den bekannten Laserdistanzmessgeräten erfolgt die Justierung des Laserstrahls mit Hilfe der optischen Zieleinrichtung senkrecht zur Ausbreitungsrichtung des Laserstrahls "über Eck", wobei die Justierung über Eck vor allem dem ungeübten Anwender Probleme bereitet.

Bei dem in Fig. 3 dargestellten Laserdistanzmessgerät 60 ist die Messeinrichtung 61 so ausgerichtet, dass die optische Achse des ausgekoppelten Laserstrahls 68 parallel zur Seitenfläche 15 verläuft. Mit Hilfe der Umlenkoptik 69 wird die Ausbreitungsrichtung des Laserstrahls an die in der Seitenfläche 15 angeordnete Austrittsöffnung 67 angepasst. Alternativ kann die Messeinrichtung 61 so im Gehäuse 9 ausgerichtet sein, dass die optische Achse des ausgekoppelten Laserstrahls parallel zum Normalenvektor der Austrittsöffnung 67 angeordnet ist.

## Patentansprüche

1. Lasergerät (40; 60) zur elektrooptischen Messung der Distanz eines Zielobjektes (4) zu einer Referenzmarke (10-15, 18) bestehend aus
- einem Gehäuse (9), das durch eine Länge, eine Breite und eine Tiefe festgelegt ist, wobei das Gehäuse (9) eine Oberseite (10), eine der Oberseite (10) gegenüberliegende Unterseite (11), eine Vorderseite (12), eine der Vorderseite (12) gegenüberliegende Rückseite (13) und zwei Seitenflächen (14, 15) aufweist,
- einer Messeinrichtung (41; 61), die einen Laserstrahl (42; 68) aussendet und aus dem von dem Zielobjekt (4) kommenden Empfangsstrahl (51; 71) einen Distanzwert ermittelt,
- einer Austrittsöffnung (46; 67) zum Auskoppeln des Laserstrahls aus dem Gehäuse (9),
- einer Anzeigeeinrichtung (6) zur Anzeige des Distanzwertes und
- einer Bedieneinrichtung (7) zur Bedienung des Lasergerätes (40; 60) und zum Starten einer Distanzmessung,
wobei die Anzeige- und Bedieneinrichtungen (6, 7) auf der Oberseite (10) des Gehäuses (9) angeordnet sind, die Ober- und Unterseiten (10, 11) des Gehäuses (9) die größten Gehäuseflächen des Lasergerätes (40; 60) sind und die zwei Seitenflächen (14, 15) des Gehäuses (9) an die langen Seiten der Ober- und Unterseiten (10, 11) angrenzen,
**dadurch gekennzeichnet, dass**
die Austrittsöffnung (46; 67) in einer ersten Gehäusefläche des Gehäuses (9) angeordnet ist, wobei die erste Gehäusefläche als Oberseite (10), als der Oberseite (10) gegenüberliegende Unterseite (11) oder als eine der zwei Seitenflächen (14, 15) des Gehäuses (9) ausgebildet ist, und die erste Gehäusefläche und eine der ersten Gehäusefläche gegenüberliegende zweite Gehäusefläche, die als Oberseite (10), Unterseite (11) oder eine der zwei Seitenflächen (14, 15) des Gehäuses (9) ausgebildet ist, als Referenzmarken dienen.

2. Lasergerät nach Anspruch 1, **dadurch gekennzeichnet, dass** im Gehäuse (9) mindestens eine weitere Austrittsöffnung (47, 48), über die der Laserstrahl (45a, 45b) aus dem Gehäuse (9) auskoppelbar ist, vorgesehen ist.

3. Lasergerät nach Anspruch 2, **dadurch gekennzeichnet, dass** die Austrittsöffnung (46) und die mindestens eine weitere Austrittsöffnung (47, 48) in einander gegenüberliegenden Flächen (10-15) des Gehäuses (9) angeordnet sind.

4. Lasergerät nach Anspruch 2, **dadurch gekennzeichnet, dass** die Austrittsöffnung (46) und die mindestens eine weitere Austrittsöffnung (47, 48) in aneinander grenzenden Flächen (10-15) des Gehäuses (9) angeordnet sind.

5. Lasergerät nach einem der Ansprüche 2 bis 4, **dadurch gekennzeichnet, dass** drei Austrittsöffnungen (46, 47, 48) zum Auskoppeln des Laserstrahls (45, 45a, 45b) aus dem Gehäuse (9) vorgesehen sind.

6. Lasergerät nach Anspruch 5, **dadurch gekennzeichnet, dass** eine erste Austrittsöffnung (46) in der Ober- oder Unterseite (10, 11), eine zweite Austrittsöffnung (47) in einer der Seitenflächen (14, 15) und eine dritte Austrittsöffnung (48) in der Vorder- oder Hinterseite (12, 13) des Gehäuses (9) angeordnet sind.

7. Lasergerät nach einem der Ansprüche 2 bis 6, **dadurch gekennzeichnet, dass** eine Umschalteinrichtung (49) zum Wechseln des Betriebsmodus des Lasergeräts (40) aus einem ersten Betriebsmodus, bei dem der Laserstrahl (45) über die Austrittsöffnung (46) auskoppelbar ist, in mindestens einen weiteren Betriebsmodus, bei dem der Laserstrahl (45a, 45b) über die mindestens eine weitere Austrittsöffnung (47, 48) auskoppelbar ist, vorgesehen ist.

8. Lasergerät nach Anspruch 7, **dadurch gekennzeichnet, dass** die Umschalteinrichtung (49) derart ausgebildet ist, dass eine schwenkbare Optik (43) bei Betätigung der Umschalteinrichtung (49) aus einer ersten Position in mindestens eine weitere Position bewegt wird, wobei die erste und die mindestens eine weitere Position derart ausgebildet sind, dass der Laserstrahl (45, 45a, 45b) über die Austrittsöffnung (46) bzw. über die mindestens eine weitere Austrittsöffnung (47, 48) aus dem Gehäuse (9) auskoppelbar ist.

9. Lasergerät nach einem der Ansprüche 2 bis 8, **dadurch gekennzeichnet, dass** eine Signaleinrichtung (50) vorgesehen ist, die die ausgewählte Austrittsöffnung (46, 47, 48) anzeigt, wobei die Signaleinrichtung (50) insbesondere in der Oberseite (10) des Gehäuses (9) angeordnet ist.

10. Lasergerät nach einem der vorhergehenden Ansprüche, **dadurch gekennzeichnet, dass** eine optische Zieleinrichtung (62) mit einem ersten optischen Element (69) und einem zweiten optischen Element (73) vorgesehen ist.

## Claims

1. Laser device (40; 60) for electro-optical distance measurement of a target object (4) in relation to a reference mark (10-15, 18) consisting of
- a housing (9), which is determined through a length, a width and a depth, in which the housing (9) has a top (10), a bottom (11) opposite the top (10), a front (12), a back (13) opposite the front (12) and two sides (14, 15),
- a measuring device (41; 61), which emits a laser beam (42; 68) and establishes a distance value from the receiving beam (51; 71) coming from the target object (4),
- an outlet opening (46; 67) for decoupling the laser beam from the housing (9),
- a display device (6) for displaying the distance value and
- an operating unit (7) for operating the laser device (40; 60) and for starting a distance measurement,
in which the display and operating devices (6, 7) are arranged on the top (10) of the housing (9), the top and bottom (10, 11) of the housing (9) are the largest housing areas of the laser device (40; 60) and the two sides (14, 15) of the housing (9) adjoin the long sides of the top and bottom (10, 11), **characterised in that**
the outlet opening (46; 67) is arranged in a first housing area of the housing (9), in which the first housing area is made as the top (10), as the bottom (11) opposite the top (10) or as one of the two sides (14, 15) of the housing (9) and the first housing area and one of the two housing areas opposite the first housing area, which is made as the top (10), bottom (11) or one of the two sides (14, 15) of the housing (9), serve as reference marks.

2. Laser device according to claim 1, **characterised in that** at least one further outlet opening (47, 48) is provided in the housing (9), through which the laser beam (45a, 45b) may be decoupled from the housing (9).

3. Laser device according to claim 2, **characterised in that** the outlet opening (46) and the at least one further outlet opening (47, 48) are arranged in areas (10-15) of the housing (9) that are opposite each other.

4. Laser device according to claim 2, **characterised in that** the outlet opening (46) and the at least one further outlet opening (47, 48) are arranged in areas (10-15) of the housing (9) that adjoin each other.

5. Laser device according to one of claims 2 to 4, **characterised in that** three outlet openings (46, 47, 48) are provided for decouplng the laser beam (45, 45a, 45b) from the housing (9).

6. Laser device according to claim 5, **characterised in that** a first outlet opening (46) is arranged in the top or bottom (10, 11), a second outlet opening (47) in one of the sides (14, 15) and a third outlet opening (48) in the front or back (12, 13) of the housing (9).

7. Laser device according to one of claims 2 to 6, **characterised in that** a switching device (49) is provided for changing the operating mode of the laser device (40) from a first operating mode, in which the laser beam (45) may be decoupled through the outlet opening (46), into at least one further operating mode, in which the laser beam (45a, 45b) may be decoupled through the at least one further outlet opening (47, 48).

8. Laser device according to claim 7, **characterised in that** the switching device (49) is made in such a way that optics (43) that may be swivelled are moved from a first position into at least one further position when the switching device (49) is operated, in which the first and the at least one further position are made in such a way that the laser beam (45, 45a, 45b) may be decoupled from the housing (9) through the outlet opening (46) or through the at least one further outlet opening (47, 48).

9. Laser device according to one of claims 2 to 8, **characterised in that** a signal device (50) is provided, which indicates the outlet opening (46, 47, 48) selected, in which the signal device (50) is arranged particularly in the top (10) of the housing (9).

10. Laser device according to one of the previous claims, **characterised in that** an optical sighting device (62) is provided with a first optical element (69) and a second optical element (73).

## Revendications

1. Appareil à laser (40 ; 60) pour une mesure électro-optique de la distance entre un objet cible (4) et une marque de référence (10 à 15, 18), comportant :
- un boîtier (9) défini par une longueur, une largeur et une profondeur, dans lequel le boîtier (9) comporte un côté supérieur (10), un côté inférieur (11) opposé au côté supérieur (10), un côté avant (12), un côté arrière (13) opposé au côté avant (12) et deux surfaces latérales (14, 15),
- un dispositif de mesure (41 ; 61) émettant un faisceau laser (42 ; 68) et déterminant une valeur de distance à partir du faisceau de réception (51 ; 71) provenant de l'objet cible (4),
- une ouverture de sortie (46 ; 67) pour extraire le faisceau laser du boîtier (9),
- un dispositif d'affichage (6) pour afficher la valeur de distance, et
- un dispositif de commande (7) pour commander l'appareil à laser (40 ; 60) et pour lancer une mesure de distance,
dans lequel les dispositifs d'affichage et de commande (6, 7) sont agencés sur le côté supérieur (10) du boîtier (9), les côtés supérieur et inférieur (10, 11) du boîtier (9) sont les plus grandes surfaces de boîtier de l'appareil à laser (40 ; 60) et les deux surfaces latérales (14, 15) du boîtier (9) sont adjacentes aux longs côtés des côtés supérieur et inférieur (10, 11),
**caractérisé en ce que**
l'ouverture de sortie (46 ; 67) est agencée dans la première surface de boîtier agencée dans le côté supérieur (10), dans le côté inférieur (11) opposé au côté supérieur (10) ou dans l'une des deux surfaces latérales (14, 15) du boîtier (9), dans lequel le côté supérieur (10), le côté inférieur (11) ou les surfaces latérales (14, 15) du boîtier (9) forment la marque de référence dans la seconde surface de boîtier différente de la première.

2. Appareil à laser selon la revendication 1, **caractérisé en ce que** dans le boîtier (9) est prévue au moins une ouverture de sortie supplémentaire (47, 48) par l'intermédiaire de laquelle le faisceau laser (45a, 45b) peut être extrait du boîtier (9).

3. Appareil à laser selon la revendication 2, **caractérisé en ce que** l'ouverture de sortie (46) et la au moins une ouverture de sortie supplémentaire (47, 48) sont agencées dans des surfaces (10 à 15) du boîtier (9) opposées l'une à l'autre.

4. Appareil à laser selon la revendication 2, **caractérisé en ce que** l'ouverture de sortie (46) et la au moins une ouverture de sortie supplémentaire (47, 48) sont agencées dans des surfaces (10 à 15) du boîtier (9) adjacentes l'une à l'autre.

5. Appareil à laser selon l'une des revendications 2 à 4, **caractérisé en ce que** trois ouvertures de sortie (46, 47, 48) sont prévues pour extraire le faisceau laser (45, 45a, 45b) du boîtier (9).

6. Appareil à laser selon la revendication 5, **caractérisé en ce que** sont prévues une première ouverture de sortie (46) dans le côté supérieur ou inférieur (10, 11), une deuxième ouverture de sortie (47) dans l'une des surfaces latérales (14, 15) et une troisième ouverture de sortie (48) dans le côté avant ou arrière (12, 13) du boîtier (9).

7. Appareil à laser selon l'une des revendications 2 à 6, **caractérisé en ce qu'**un dispositif de commutation (49) est prévu pour basculer le mode de fonctionnement de l'appareil à laser (40) d'un premier mode de fonctionnement dans lequel le faisceau laser (45) peut être extrait par l'intermédiaire de l'ouverture de sortie (46), à au moins un autre mode de fonctionnement dans lequel le faisceau laser (45a, 45b) peut être extrait par l'intermédiaire d'au moins une ouverture de sortie supplémentaire (47, 48).

8. Appareil à laser selon la revendication 7, **caractérisé en ce que** le dispositif de commutation (49) est configuré de telle sorte qu'un composant optique pouvant pivoter (43) est déplacé en actionnant le dispositif de commutation (49) d'une première position à au moins une autre position, dans lequel la première position et la au moins une autre position sont configurées de telle sorte que le faisceau laser (45, 45a, 45b) peut être extrait du boîtier (9) par l'intermédiaire de l'ouverture de sortie (46) ou par l'intermédiaire de la au moins une ouverture de sortie supplémentaire (47, 48).

9. Appareil à laser selon l'une des revendications 2 à 8, **caractérisé en ce qu'**est prévu un dispositif de signalisation (50) qui affiche l'ouverture de sortie (46, 47, 48) sélectionnée, dans lequel le dispositif de signalisation (50) est agencé en particulier dans le côté supérieur (10) du boîtier (9).

10. Appareil à laser selon l'une des revendications précédentes, **caractérisé en ce qu'**un dispositif cible optique (62) est prévu avec un premier élément optique (69) et un second élément optique (73).
